# EUROPEAN PATENT APPLICATION

(11) **EP 4 797 371 A1**
(43) Date of publication of application: **26.08.2026**
(21) Application number: 24896747.3
(22) Date of filing: 29.11.2024
(51) Int. Cl.: H01M 10/0567, H01M 10/0525

(54) **ELECTROLYTE ADDITIVE, ELECTROLYTE, BATTERY AND ELECTRIC DEVICE**

(30) Priority: 01.12.2023 CN 202311637451
(71) Applicant: Guangzhou Tinci Materials Technology Co., Ltd, Guangzhou, Guangdong 510760 (CN); Jiujiang Tinci Materials Technology Co., Ltd., Jiujiang, Jiangxi 332000 (CN)
(72) Inventor: YUE, Yujuan, Guangzhou, Guangdong 510760 (CN); SUN, Wenpo, Guangzhou, Guangdong 510760 (CN); XIE, Tian, Guangzhou, Guangdong 510760 (CN)
(74) Representative: Bals & Vogel Patentanwälte PartGmbB
(86) International application number: PCT/CN2024/135786
(87) International publication number: WO 2025/113667

(57) **Abstract**

Provided are an electrolyte additive, an electrolyte, a battery, and an electric device. The electrolyte additive for a battery with a silicon-based negative electrode includes a first additive and a first lithium salt. The first additive includes tetravinylsilane and tris[ethenyl(dimethyl)silyl]phosphate. The first lithium salt includes lithium tetrafluoro(oxalato)phosphate.

## Description

This application claims priority to Chinese Patent Application No. 202311637451.1, titled "ELECTROLYTE ADDITIVE, ELECTROLYTE, BATTERY, AND ELECTRIC DEVICE", and filed with China National Intellectual Property Administration on December 1, 2023, the entire contents of which are incorporated herein by reference.

### FIELD

The present disclosure relates to the field of electrolytes, and more particularly, to an electrolyte additive, an electrolyte, a battery, and an electric device.

### BACKGROUND

With increasing attention being paid to the depletion of non-renewable energy sources and environmental pollution issues, renewable clean energy has developed rapidly. Due to advantages such as high specific energy, long cycle life, and low self-discharge, lithium-ion batteries are widely used in consumer electronics, energy storage, and power batteries. Typically, a battery includes a positive electrode plate, a negative electrode plate, an electrolyte, and a separator. The electrolyte of the lithium-ion battery is composed of a solvent, an electrolyte lithium salt, and an electrolyte additive. By adding the electrolyte additive, cycle performance, high-temperature storage performance, and other properties of the battery can be effectively improved. However, conventional electrolyte additives still face certain problems in practical applications.

It should be noted that the above statements are merely intended to provide background technical information related to the present disclosure, and do not necessarily constitute the related art.

### SUMMARY

In a first aspect of the present disclosure, an electrolyte additive for a battery with a silicon-based negative electrode is provided. The electrolyte additive includes a first additive and a first lithium salt. The first additive includes tetravinylsilane and tris[ethenyl(dimethyl)silyl]phosphate. The first lithium salt includes lithium tetrafluoro(oxalato)phosphate. Thus, the electrolyte containing the electrolyte additive can improve cycle performance and high-temperature performance of the battery.

In some embodiments, in the electrolyte additive, a mass fraction of the tetravinylsilane is a, and a mass fraction of the lithium tetrafluoro(oxalato)phosphate is b, where a/b ranges from 0.05 to 20. Thus, the cycle performance of the battery containing the electrolyte additive can be improved.

In some embodiments, in the electrolyte additive, a mass fraction of the lithium tetrafluoro(oxalato)phosphate is b, and a mass fraction of the tris[ethenyl(dimethyl)silyl]phosphate is c, where b/c ranges from 0.05 to 20. Thus, high-temperature storage performance of the battery containing the electrolyte additive can be improved.

In some embodiments, the electrolyte additive further includes a second additive. The second additive includes at least one of a high-temperature additive, a negative electrode film-forming additive, a lithium salt additive, or a water-/acid-scavenging additive. Thus, rate performance, the high-temperature performance, and a cycle life of the battery containing the electrolyte additive can be improved.

In some embodiments, the second additive satisfies at least one of the following conditions: the high-temperature additive includes at least one of 1,3-propane sultone, 1,3-propene sultone, ethylene sulfate, or ethylene sulfite; the negative electrode film-forming additive includes at least one of vinylene carbonate, fluoroethylene carbonate, or vinyl ethylene carbonate; the lithium salt additive includes at least one of lithium bis(oxalato)borate, lithium difluoro(oxalato)borate, lithium difluorobis(oxalato)phosphate, lithium tetrafluoroborate, lithium bis(trifluoromethanesulfonyl)imide, lithium bis(pentafluoroethanesulfonyl)imide, lithium trifluoromethanesulfonate, or lithium difluorophosphate; or the water-/acid-scavenging additive includes at least one of tris(trimethylsilyl) borate or tris(trimethylsilyl) phosphate. Thus, the rate performance, the high-temperature performance, and the cycle life of the battery containing the electrolyte additive can be further improved.

In a second aspect of the present disclosure, an electrolyte is provided. The electrolyte includes the electrolyte additive described above. Thus, the electrolyte possesses all the features and advantages of the electrolyte additive described above, which are not described in detail herein.

In some embodiments, the electrolyte further includes a solvent and an electrolyte lithium salt. The electrolyte lithium salt includes at least one of lithium hexafluorophosphate or lithium bis(fluorosulfonyl)imide. Thus, ionic conductivity and long-term stability of the electrolyte can be improved.

In some embodiments, in the electrolyte, a mass fraction of the electrolyte lithium salt ranges from 12% to 18%. Thus, the ionic conductivity of the electrolyte can be further improved.

In some embodiments, in the electrolyte, a mass fraction of the tetravinylsilane ranges from 0.1% to 2%. Thus, cycle performance of the battery containing the electrolyte can be improved.

In some embodiments, in the electrolyte, a mass fraction of the lithium tetrafluoro(oxalato)phosphate ranges from 0.1% to 2%. Thus, the cycle performance of the battery containing the electrolyte can be improved.

In some embodiments, in the electrolyte, a mass fraction of the tris[ethenyl(dimethyl)silyl]phosphate ranges from 0.1% to 2%. Thus, high-temperature storage performance of the battery containing the electrolyte can be improved.

In some embodiments, in the electrolyte, a mass fraction of the second additive ranges from 0.5% to 3%. Thus, rate performance, high-temperature performance, and a cycle life of the battery containing the electrolyte can be improved.

In a third aspect of the present disclosure, a battery is provided. The battery includes the electrolyte additive described above or the electrolyte described above. Thus, the battery possesses all the features and advantages of the electrolyte additive and the electrolyte that are described above, which are not described in detail herein.

In some embodiments, the battery further includes a negative electrode plate. The negative electrode plate includes a negative electrode current collector and a negative electrode active material layer located on at least one side of the negative electrode plate. The negative electrode active material layer includes a negative electrode active material. In the negative electrode active material, a mass fraction of element silicon ranges from 3% to 50%. Thus, an energy density of the battery can be improved.

In a fourth aspect of the present disclosure, an electric device is provided. The electric device includes the battery described above. Thus, the electric device possesses all the features and advantages of the battery described above, which are not described in detail herein.

### DETAILED DESCRIPTION

Unless otherwise defined, all technical and scientific terms used herein have the same meaning as commonly understood by those skilled in the art to which the present disclosure belongs. Terms used herein are for the purpose of describing particular embodiments only and are not intended to limit the present disclosure. Unless otherwise specified, numerical values of various parameters mentioned herein can be measured using various measuring methods commonly used in the field (for example, the measurement can be carried out according to the methods given in the embodiments of the present disclosure).

Terms "comprise/include" and "have" as well as any variations thereof used in the specification and claims of the present disclosure are open-ended expressions, that is, including the contents specified herein but not excluding other aspects.

In the description of the present disclosure, all numbers disclosed herein are approximations, whether or not words "about" or "approximately" are used. There may be a difference of 10% or less, or a reasonable difference as deemed by those skilled in the art for each numerical value, such as a difference of 1%, 2%, 3%, 4%, or 5%.

In the description of the present disclosure, the terms "first" and "second" are only used for descriptive purposes, and cannot be understood as indicating or implying relative importance or implicitly indicating the number of indicated technical features. Therefore, "the first feature" and "the second feature" may include one of the features or more of the features.

In the description of the present disclosure, "A and/or B" may include any one of three situations: A only, B only, or both A and B. A and B are merely used as examples and can represent any technical features connected by "and/or" in the present disclosure.

An amount of electrolyte additives only accounts for a small portion of an electrolyte in a lithium-ion battery. An appropriate amount of additives can form a Solid Electrolyte Interface (SEI) on a surface of a negative electrode active material and a Cathode Electrolyte Interface (CEI) on a surface of a positive electrode active material. The SEI and the CEI form films on the surfaces of the negative electrode active material and the positive electrode active material, respectively, effectively alleviating a problem of side reactions that occur after direct contact between the active materials and the electrolyte.

An electrolyte additive tetravinylsilane has a high HOMO energy level, and thus generating an organic polymer film mainly composed of Si-C on the interface of the positive electrode active material prior to the solvent in the electrolyte after capacity grading of a battery is completed. In this way, direct contact between the positive electrode active material and the electrolyte is reduced, effectively reducing decomposition and gas generation of other components in the electrolyte on the positive electrode interface under a high voltage, and corrosion by acidic substances and structural collapse of the positive electrode active material. Consequently, cycle performance of the lithium-ion battery can be effectively improved. Further, the tetravinylsilane also participates in film formation of the SEI. However, the SEI film formed by the tetravinylsilane is thick and uneven in thickness, which increases an internal resistance of the battery and affects rate performance of the battery. Furthermore, when a silicon-based material is used as the negative electrode active material, due to unsatisfactory uniformity of an SEI film structure formed by the tetravinylsilane, lithium atoms enter a silicon crystal to form Li₁₅Si₄, which results in some lithium ions being unable to participate in a charge-discharge cycle of the battery again, causing an irreversible capacity loss in the battery.

An SEI film-forming potential of lithium tetrafluoro(oxalato)phosphate is earlier than that of the tetravinylsilane, meaning that the lithium tetrafluoro(oxalato)phosphate forms a film earlier than the tetravinylsilane. Thus, the lithium tetrafluoro(oxalato)phosphate can preferentially generate an inorganic film rich in phosphates and LiF with high thickness uniformity on the surface of the negative electrode active material. This can prevent lithium atoms from entering the silicon crystal, inhibiting formation of Li₁₅Si₄ in the silicon-based material. In this way, a capacity of the battery can be maintained during the charge-discharge cycle, improving the cycle performance of the battery. After the SEI film formation by the lithium tetrafluoro(oxalato)phosphate, the tetravinylsilane forms an organic polymer film mainly composed of Si-C at an outer side of the inorganic film rich in phosphates and LiF, to jointly reduce an impedance of the negative electrode.

Further, free fluoride ions in the lithium tetrafluoro(oxalato)phosphate combine with free hydrogen ions in the electrolyte to generate a hydrofluoric acid, resulting in a relatively high overall acidity of the electrolyte. During long-term high-temperature storage (for example, when an outdoor temperature approaches 40°C, a temperature of the battery inside an electric vehicle parked outdoors can reach 70°C), the hydrofluoric acid attacks both the positive electrode active material and the negative electrode active material, which causes severe side reactions, leading to a decrease in a voltage of the battery and a significant reduction in a capacity retention rate.

A Si-O bond and a Si-C=C bond in the tris[ethenyl(dimethyl)silyl]phosphate (CAS No.: 113419-25-3) break after combining with the hydrofluoric acid in the electrolyte, serving to reduce the acidity. In addition, the tris[ethenyl(dimethyl)silyl]phosphate also aids in the formation of the CEI film and the SEI film. By adding the tris[ethenyl(dimethyl)silyl]phosphate, an adverse increase in the acidity of the electrolyte caused by the lithium tetrafluoro(oxalato)phosphate can be effectively reduced, and a high-temperature resistance of the electrolyte can be improved, enhancing high-temperature performance of the battery.

In a first aspect of the present disclosure, an electrolyte additive for a battery with a silicon-based negative electrode is provided. The electrolyte additive includes a first additive and a first lithium salt. The first additive includes tetravinylsilane and tris[ethenyl(dimethyl)silyl]phosphate. The first lithium salt includes lithium tetrafluoro(oxalato)phosphate. In the present disclosure, combining the tetravinylsilane, the tris[ethenyl(dimethyl)silyl]phosphate, and the lithium tetrafluoro(oxalato)phosphate not only facilitates formation of the SEI film and the CEI film each having a low interfacial impedance, improving the cycle performance of the battery containing this additive combination, but also significantly improves high-temperature storage performance of the battery containing the silicon-based negative electrode, broadening application scenarios of the battery.

In some embodiments, in the electrolyte additive, a mass fraction of the tetravinylsilane is a, and a mass fraction of the lithium tetrafluoro(oxalato)phosphate is b, where a/b ranges from 0.05 to 20.

As an example, a/b may be 0.05, 0.1, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20.

Through rational proportioning of the tetravinylsilane and the lithium tetrafluoro(oxalato)phosphate, formation of uniform and robust CEI and SEI films for a battery system containing the silicon-based negative electrode is facilitated.

Compared with other lithium salt additives, the lithium tetrafluoro(oxalato)phosphate has a lower film formation potential, is less prone to decompose and generate a gas, and exhibits superior chemical stability.

In some embodiments, in the electrolyte additive, a mass fraction of the lithium tetrafluoro(oxalato)phosphate is b, and a mass fraction of the tris[ethenyl(dimethyl)silyl]phosphate is c, where b/c ranges from 0.05 to 20. Thus, high-temperature storage performance of the battery containing the electrolyte additive can be improved.

As an example, b/c may be 0.05, 0.1, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20.

Compared with other additives containing Si-O bonds and Si-C=C bonds, the tris[ethenyl(dimethyl)silyl]phosphate exhibits superior chemical stability, higher ionic conductivity, and higher compatibility.

In some embodiments, the electrolyte additive further includes a second additive. The second additive includes at least one of a high-temperature additive, a negative electrode film-forming additive, a lithium salt additive, or a water-/acid-scavenging additive.

By adding the second additive, rate performance, high-temperature cycle performance, and cycle life of the battery containing the electrolyte additive can be improved.

In some embodiments, the high-temperature additive includes at least one of 1,3-propane sultone (PS), 1,3-propene sultone (PST), ethylene sulfate (DTD), or ethylene sulfite (ES).

By adding the high-temperature additive, the high-temperature resistance of the electrolyte can be improved.

In some embodiments, the negative electrode film-forming additive includes at least one of vinylene carbonate (VC), fluoroethylene carbonate (FEC), or vinyl ethylene carbonate (VEC).

By adding the negative electrode film-forming additive, SEI film formation can be improved, and uniformity of the SEI film formation can be enhanced.

In some embodiments, the lithium salt additive includes at least one of lithium bis(oxalato)borate (LiBOB), lithium difluoro(oxalato)borate (LiODFB), lithium difluorobis(oxalato)phosphate (LiODFP), lithium tetrafluoroborate, lithium bis(trifluoromethanesulfonyl)imide, lithium bis(pentafluoroethanesulfonyl)imide, lithium trifluoromethanesulfonate, or lithium difluorophosphate(LiPO₂F₂).

By adding the lithium salt additive, solubility of the lithium salt in the electrolyte is improved, stability of the electrolyte under a high-temperature condition is enhanced, the ionic conductivity of the electrolyte is increased, hydrolysis of the electrolyte under a moisture-containing condition is reduced, and oxidation of the electrolyte is suppressed.

In some embodiments, the water-/acid-scavenging additive includes at least one of tris(trimethylsilyl) borate (TMSB) or tris(trimethylsilyl) phosphate (TMSP).

By adding the water-/acid-scavenging additive, reactions with water and acidic substances in the electrolyte, such as the hydrofluoric acid, can occur, reducing an impact of the water and/or the acidic substances on the stability of the electrolyte. Moreover, after scavenging the water and acid, the water-/acid-scavenging additive can also participate in the formation of the SEI film and the CEI film.

In a second aspect of the present disclosure, an electrolyte is provided. The electrolyte includes the electrolyte additive described above. Thus, the electrolyte possesses all the features and advantages of the electrolyte additive described above, which are not described in detail herein.

In some embodiments, the electrolyte further includes a solvent and an electrolyte lithium salt. The electrolyte lithium salt includes at least one of lithium hexafluorophosphate or lithium bis(fluorosulfonyl)imide.

The solvent is a main component of the electrolyte. The solvent should have high solubility for the lithium salt, enabling the electrolyte has high ionic conductivity.

When the electrolyte lithium salt dissolves in the electrolyte solvent, lithium ions are released. These lithium ions form a solvation structure with the electrolyte, which facilitates rapid migration of the lithium ions.

In some embodiments, in the electrolyte, a mass fraction of the electrolyte lithium salt ranges from 12% to 18%.

As an example, in the electrolyte, the mass fraction of the electrolyte lithium salt may be 12%, 12.5%, 13%, 13.5%, 14%, 14.5%, 15%, 15.5%, 16%, 16.5%, 17%, 17.5%, or 18%.

When the mass fraction of the electrolyte lithium salt in the electrolyte falls within the above range, the electrolyte lithium salt can dissolve sufficiently in the electrolyte solvent, resulting in high ionic conductivity and low manufacturing costs for the electrolyte.

In some embodiments, the solvent may include at least one of ethylene carbonate (EC), propylene carbonate (PC), dimethyl carbonate (DMC), diethyl carbonate (DEC), ethyl methyl carbonate (EMC), ethyl propionate, propyl propionate, methyl acetate, ethyl acetate, propyl acetate, or methyl propionate.

The solvent in the electrolyte serves as an important carrier for ion transport. After the electrolyte lithium salt dissolves in the solvent, the electrolyte has high electronic conductivity. Consequently, by selecting the above solvents, the cycle life and a charge-discharge rate of the battery can be improved.

In some embodiments, a mass fraction of the solvent in the electrolyte ranges from 50% to 80%.

As an example, the mass fraction of the solvent in the electrolyte may be 55%, 57%, 60%, 63%, 65%, 67%, 70%, 73%, 75%, 77%, or 80%.

In some embodiments, in the electrolyte, a mass fraction of the tetravinylsilane ranges from 0.1% to 2%.

As an example, in the electrolyte, the mass fraction of the tetravinylsilane may be 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0%.

When the mass fraction of the tetravinylsilane in the electrolyte ranges from 0.1% to 2%, a content of the tetravinylsilane is moderate, enabling sufficient CEI film formation with an appropriate thickness. Additionally, after the tetravinylsilane is consumed during the formation of the CEI film, less amount of tetravinylsilane is left, which can reduce gas generation from side reactions and decomposition of the tetravinylsilane.

In some embodiments, in the electrolyte, a mass fraction of the lithium tetrafluoro(oxalato)phosphate ranges from 0.1% to 2%.

As an example, in the electrolyte, the mass fraction of the lithium tetrafluoro(oxalato)phosphate may be 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0%.

When the mass fraction of the lithium tetrafluoro(oxalato)phosphate in the electrolyte ranges from 0.1% to 2%, the lithium tetrafluoro(oxalato)phosphate can form a uniform SEI film earlier than the tetravinylsilane, inhibiting a direct film formation of the tetravinylsilane on the surface of the negative electrode active material, and improving thickness uniformity of the SEI film.

In some embodiments, in the electrolyte, a mass fraction of the tris[ethenyl(dimethyl)silyl]phosphate ranges from 0.1% to 2%. Thus, high-temperature storage performance of the battery containing the electrolyte can be improved.

As an example, in the electrolyte, the mass fraction of the tris[ethenyl(dimethyl)silyl]phosphate may be 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0%.

When the mass fraction of the tris[ethenyl(dimethyl)silyl]phosphate in the electrolyte ranges from 0.1% to 2%, the tris[ethenyl(dimethyl)silyl]phosphate can effectively consume acidic substances in the electrolyte, such as the hydrofluoric acid, which therefore reduces side reactions between each of the positive electrode active material and the negative electrode active material and the acidic substances under a high-temperature condition, improving the cycle performance and the high-temperature performance of the battery.

In some embodiments, in the electrolyte, a mass fraction of the second additive ranges from 0.5% to 3%.

As an example, the mass fraction of the second additive in the electrolyte may be 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, or 3.0%.

As an example, when the second additive includes the high-temperature additive, a mass fraction of the high-temperature additive in the electrolyte ranges from 0% to 2%.

As an example, when the second additive includes the negative electrode film-forming additive, a mass fraction of the negative electrode film-forming additive in the electrolyte ranges from 0.5% to 3%.

As an example, when the second additive includes the lithium salt additive, a mass fraction of the lithium salt additive in the electrolyte ranges from 0% to 1%.

As an example, when the second additive includes the water-/acid-scavenging additive, a mass fraction of the water-/acid-scavenging additive in the electrolyte ranges from 0% to 1%.

In a third aspect of the present disclosure, a battery is provided. The battery includes the electrolyte additive described above or the electrolyte described above. Thus, the battery possesses all the features and advantages of the electrolyte additive and the electrolyte that are described above, which are not described in detail herein.

Under normal circumstances, a battery includes a positive electrode plate, a negative electrode plate, an electrolyte, and a separator. During charging or discharging of the battery, active ions shuttle between the positive electrode plate and the negative electrode plate by intercalating into and deintercalating from the positive electrode plate and the negative electrode plate. The electrolyte functions to conduct ions between the positive electrode plate and the negative electrode plate. The separator is placed between the positive electrode plate and the negative electrode plate, primarily serving to avoid short circuits between the positive electrode and the negative electrode while allowing the ions to pass through.

In some embodiments, the battery further includes a negative electrode plate. The negative electrode plate includes a negative electrode current collector and a negative electrode active material layer located on at least one side of the negative electrode plate. The negative electrode active material layer includes a negative electrode active material. In the negative electrode active material, a mass fraction of element silicon ranges from 3% to 50%.

By increasing a specific capacity of the negative electrode active material, an energy density of the battery can be effectively improved. A specific capacity of a conventional graphite-based material has already reached its theoretical upper limit (372 mAh/g), while a maximum theoretical specific capacity of a silicon-based negative electrode material can reach 4,200 mAh/g, making the silicon-based negative electrode active material highly promising for application. The silicon-based negative electrode material undergoes significant volume changes during the charging or the discharging of the battery. During repeated charge-discharge cycles, due to excessive volume expansion and contraction of the silicon-based negative electrode material, the SEI film on the surface of the silicon-based negative electrode repeatedly breaks and reforms, which continuously consumes the electrolyte, resulting in unsatisfactory cycle performance of the battery.

In the present disclosure, by optimizing a composition of the electrolyte additive, an SEI film having high structural stability can be formed on a surface of the silicon-based negative electrode active material. Even when the silicon-based negative electrode active material undergoes significant volume changes during the charge-discharge cycles, the SEI film can still effectively adhere to the surface of the negative electrode active material, which effectively reduces electrolyte consumption caused by repeated breaking and reformation of the SEI film, improving the cycle performance of the battery.

In some embodiments, the battery includes a positive electrode plate. The positive electrode plate includes a positive electrode current collector and a positive electrode active material layer located on at least one side surface of the positive electrode plate. The positive electrode active material layer includes a positive electrode active material. In the positive electrode active material, a mass fraction of element nickel is greater than or equal to 40%.

When the mass fraction of the element nickel in the positive electrode active material falls within the above range, costs of the positive electrode active material are low, and a capacity per gram of the positive electrode active material is significantly improved.

In some embodiments, the positive electrode active material satisfies the general formula LiₐNi_{b}Co_{c}M1_{d}M2ₑO_{f}R_{g}, where 1≤a≤1.2, 0.6<b<1, 0<c<1, 0<d<1, 0≤e≤0.2, b+c+d+e=1, 1≤f≤2, 0≤g≤1, and f+g=2; M1 includes Mn and/or Al; M2 includes at least one of Zr, Zn, Cu, Cr, Mg, Fe, V, Ti, Sr, Sb, Y, W, or Nb; R includes at least one of N, F, S, or Cl.

In some embodiments, the positive electrode active material may include at least one of LiNi_{0.7}Co_{0.1}Mn_{0.2}O₂(NCM712), LiNi_{0.8}Co_{0.1}Mn_{0.1}O₂(NCM811), LiNi_{0.8}Co_{0.15}Al_{0.05}O₂, or LiNi_{0.9}Co_{0.05}Mn_{0.05}O₂. In this way, the capacity per gram of the positive electrode active material can be further improved, and the costs of the positive electrode active material can be reduced.

During the charging or the discharging of the battery, deintercalation and consumption of Li occur. When the battery is discharged to different states, the content of Li in positive electrode active material varies accordingly. In the listing of positive electrode active materials in the present disclosure, a molar content of Li refers to an initial state of the material. When the positive electrode active material is applied in the battery and undergoes cyclic charging and discharging, the molar content of Li changes.

In the listing of positive electrode active materials in the present disclosure, a molar content of O is merely a theoretical state value. During the cyclic charging and discharging of the battery, a lattice oxygen release from the positive electrode active material causes the molar content of oxygen to change.

In some embodiments, the positive electrode current collector may include a metallic foil or a composite current collector. As an example, the metallic foil may be an aluminum foil. The composite current collector may include a polymer substrate and a metallic layer formed on at least one surface of the polymer substrate. The composite current collector may be formed by forming a metallic material (such as aluminum, aluminum alloy, nickel, nickel alloy, titanium, titanium alloy, silver, and silver alloy) on a polymer substrate material (such as polypropylene (PP), polyethylene terephthalate (PET), polybutylene terephthalate (PBT), polystyrene (PS), and polyethylene (PE)).

In some embodiments, the positive electrode active material layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode active material layer may further optionally include a conductive agent. For example, the conductive agent may include at least one of superconducting carbon, acetylene black, carbon black, Ketjen black, a carbon dot, a carbon nanotube, graphene, or a carbon nanofiber.

In some embodiments, the negative electrode plate includes the negative electrode current collector and a negative electrode active material layer disposed on at least one surface of the negative electrode current collector. The negative electrode active material layer includes a negative electrode active material. The negative electrode active material may include at least one of artificial graphite, natural graphite, soft carbon, hard carbon, a mesocarbon microbead, a silicon-based material, a tin-based material, or lithium titanate.

In some embodiments, the negative electrode active material layer may further include a binder, a conductive agent, and other additives. For example, the binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS); the conductive agent may include at least one of superconducting carbon, acetylene black, carbon black, Ketjen black, a carbon dot, a single-walled carbon nanotube, graphene, or a carbon nanofiber; the additives may include a thickener such as sodium carboxymethyl cellulose (CMC-Na).

The present disclosure imposes no particular limitation on a type of separator. Any porous separator having satisfactory chemical stability and mechanical stability may be selected. For example, a material of the separator may include at least one of a glass fiber, non-woven fabric, polyethylene, polypropylene, or polyvinylidene fluoride. The separator may be a single-layer film or a multi-layer composite film.

The battery of the present disclosure may be in a form of a battery cell, a battery module, or a battery pack.

In some embodiments, battery cells may be assembled into a battery module. One or more battery cells may be contained in the battery module. A specific quantity of the battery cells may be selected by those person skilled in the art based on an application and a capacity of the battery module.

In some embodiments, battery modules may be further assembled into a battery pack. One or more battery modules may be contained in the battery pack. A specific quantity of the battery modules may be selected by those skilled in the art based on an application and a capacity of the battery pack.

In a fourth aspect of the present disclosure, an electric device is provided. The electric device includes the battery described above. Thus, the electric device possesses all the features and advantages of the battery described above, which are not described in detail herein.

The battery cell, the battery module, or the battery pack may be used as a power source or an energy storage unit for the electric device. The electric device may include a mobile device (for example, a mobile phone, a laptop computer, etc.), an electric vehicle (for example, a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, etc., but is not limited thereto.

The battery, the battery module, or the battery pack can be selected based a usage demand of the electric device.

According to an embodiment, the electric device may be a pure electric vehicle, a hybrid electric vehicle, a plug-in hybrid electric vehicle, etc. To meet demands of the electric device for high power and high energy density of the battery, the battery pack or the battery module may be used.

According to another embodiment, the electric device may be a mobile phone, a tablet computer, a laptop computer, etc. Such electric devices usually require slimness and lightness, and thus the battery cell may be used as the power source.

Solutions of the present disclosure are described below through specific examples. It should be noted that the examples described below are only used for illustrating the present disclosure and should not be construed as limiting the scope of the present disclosure. Where specific techniques or conditions are not indicated in the examples, the procedures shall be carried out in accordance with the techniques or conditions described in the literature in the field or in accordance with the product specification. The reagents or instruments used without the indication of the manufacturers are all conventional products that can be purchased commercially.

### Example 1

### Preparation of positive electrode plate:

The positive electrode active material NCM811, the binder polyvinylidene fluoride (PVDF), and the conductive agent acetylene black were mixed based on a weight ratio of 96.5:2:1.5. N-methylpyrrolidone (NMP) was added and stirred by a vacuum mixer, until the mixture system became a positive electrode slurry with uniform fluidity. The positive electrode slurry was evenly coated on two surfaces of an aluminum foil. The aluminum foil coated with the positive electrode slurry was dried in an oven at 120°C for 8 hours. Finally, rolling and slitting were performed on the dried aluminum foil to obtain the positive electrode plate.

### Preparation of negative electrode plate:

The negative electrode active material artificial graphite, silicon monoxide, sodium carboxymethyl cellulose (CMC-Na), styrene-butadiene rubber, conductive carbon black (SP), and single-walled carbon nanotube (SWCNT) were mixed based on a mass ratio of 79.5:15:2.5:1.5:1:0.5. Deionized water was added. The mixture was stirred by the vacuum mixer to obtain a negative electrode slurry. The negative electrode slurry was evenly coated on two surfaces of a copper foil. The copper foil coated with the negative electrode slurry was air-dried at a room temperature, and then transferred to an oven and dried at 80°C for 10 hours. Finally, cold pressing and slitting were performed to obtain the negative electrode plate.

### Preparation of electrolyte:

In an argon-filled glove box (moisture<10 ppm and oxygen<1 ppm), the solvent EC:EMC:DEC was uniformly mixed based on a mass ratio of 3:5:2. A thoroughly dried electrolyte lithium salt LiPF₆ having a mass fraction of 14.5% and electrolyte additives were quickly added to the mixed solvent. The electrolyte additives include the first additive and the first lithium salt. The first additive was the tetravinylsilane and the tris[ethenyl(dimethyl)silyl]phosphate (CAS No.: 113419-25-3). The first lithium salt was the lithium tetrafluoro(oxalato)phosphate. Types and mass fractions of the additives in the electrolyte are shown in Table 1. After thorough mixing, the mixture was stirred uniformly to obtain the electrolyte.

### Preparation of separator:

A polyethylene separator having a thickness of 8 µm was selected.

### Preparation of lithium-ion battery:

The prepared positive electrode plate, separator, and negative electrode plate were wound to obtain an un-impregnated bare cell. The bare cell was placed in an outer packaging. The prepared electrolyte was injected into the dried bare cell. After processes such as vacuum sealing, resting, formation, shaping, and sorting, the lithium-ion battery was obtained.

Lithium-ion batteries in Example 2 to Example 36 and Comparative Example 1 to Comparative Example 7 were all prepared based on the above preparation method, with differences as shown in Table 1.

Example 2 to Example 6 differ from Example 1 in an amount of the lithium tetrafluoro(oxalato)phosphate.

Examples 7 to Example 11 differ from Example 3 in an amount of the tetravinylsilane.

Example 12 differs from Example 2 in the amount of the tetravinylsilane.

Example 13 to Example 17 differ from Example 3 in an amount of the tris[ethenyl(dimethyl)silyl]phosphate.

Example 18 differs from Example 2 in the amount of the tris[ethenyl(dimethyl)silyl]phosphate.

Example 19 differs from Example 5 in the amount of the tris[ethenyl(dimethyl)silyl]phosphate.

Example 20 to Example 28 differ from Example 3 in a substance and an amount of the second additive.

Example 29 to Example 31 differ from Example 1 in using different negative electrode active materials. Specifically, natural graphite, hard carbon, and lithium titanate were used in Example 29, Example 30, and Example 31, respectively, to replace artificial graphite used in Example 1.

Example 32 to Example 33 differ from Example 1 in using different positive electrode active materials. Specifically, LiNi_{0.7}Co_{0.1}Mn_{0.2}O₂ and LiNi_{0.9}Co_{0.05}Mn_{0.05}O₂ were used in Example 32 and Example 33, respectively, to replace NCM811 in Example 1.

Example 34 to Example 36 differ from Example 1 in using different negative electrode plates.

Specifically, in Example 34, the negative electrode active material artificial graphite, silicon monoxide, sodium carboxymethyl cellulose (CMC-Na), styrene-butadiene rubber, conductive carbon black (SP), and single-walled carbon nanotube (SWCNT) were mixed based on a mass ratio of 91.5:3:2.5:1.5:1:0.5. Deionized water was added. The mixture was stirred by the vacuum mixer to obtain the negative electrode slurry.

In Example 35, the negative electrode active material artificial graphite, silicon monoxide, sodium carboxymethyl cellulose (CMC-Na), styrene-butadiene rubber, conductive carbon black (SP), and single-walled carbon nanotube (SWCNT) were mixed based on a mass ratio of 74.5:20:2.5:1.5:1:0.5. The deionized water was added. The mixture was stirred by the vacuum mixer to obtain the negative electrode slurry.

In Example 36, the negative electrode active material artificial graphite, silicon monoxide, sodium carboxymethyl cellulose (CMC-Na), styrene-butadiene rubber, conductive carbon black (SP), and single-walled carbon nanotube (SWCNT) were mixed based on a mass ratio of 64.5:30:2.5:1.5:1:0.5. The deionized water was added. The mixture was stirred by the vacuum mixer to obtain the negative electrode slurry.

Comparative Example 1 to Comparative Example 7 differ from Example 3 in that: in Comparative Example 1, the first additive and the first lithium salt were not added; in Comparative Example 2, the lithium tetrafluoro(oxalato)phosphate and the tris[ethenyl(dimethyl)silyl]phosphate were not added; in Comparative Example 3, the tetravinylsilane and the tris[ethenyl(dimethyl)silyl]phosphate were not added; in Comparative Example 4, the tetravinylsilane and the lithium tetrafluoro(oxalato)phosphate were not added; in Comparative Example 5, the tris[ethenyl(dimethyl)silyl]phosphate was not added; in Comparative Example 6, the lithium tetrafluoro(oxalato)phosphate was not added; in Comparative Example 7, the tetravinylsilane was not added.

**Table 1**

| No. | Mass fraction/% in the electrolyte | | | | Substance and mass fraction % of the second additive | a/b | b/c |
|---|---|---|---|---|---|---|---|
| | Tetravinylsilane | | Lithium Tetrafluoro(oxalat o)-phosphate | Tris[ethenyl(dimethyl )-silyl]phosphate | | | |
| Example 1 | | 0.1 | 0.05 | 0.5 | PS,1;FEC,10;VC,0.5 | 2 | 0.1 |
| Example 2 | | 0.1 | 0.1 | 0.5 | PS,1;FEC,10;VC,0.5 | 1 | 0.2 |
| Example 3 | | 0.1 | 0.5 | 0.5 | PS,1;FEC,10;VC,0.5 | 0.2 | 1 |
| Example 4 | | 0.1 | 1 | 0.5 | PS,1;FEC,10;VC,0.5 | 0.1 | 2 |
| Example 5 | | 0.1 | 2 | 0.5 | PS,1;FEC,10;VC,0.5 | 0.05 | 4 |
| Example 6 | | 0.1 | 3 | 0.5 | PS,1;FEC,10;VC,0.5 | 0.03 | 6 |
| Example 7 | | 0.5 | 0.5 | 0.5 | PS,1;FEC,10;VC,0.5 | 1 | 1 |
| Example 8 | | 1 | 0.5 | 0.5 | PS,1;FEC,10;VC,0.5 | 2 | 1 |
| Example 9 | | 2 | 0.5 | 0.5 | PS,1;FEC,10;VC,0.5 | 4 | 1 |
| Example 10 | | 0.05 | 0.5 | 0.5 | PS,1;FEC,10;VC,0.5 | 0.1 | 1 |
| Example 11 | | 2.5 | 0.5 | 0.5 | PS,1;FEC,10;VC,0.5 | 5 | 1 |
| Example 12 | | 2 | 0.1 | 0.5 | PS,1;FEC,10;VC,0.5 | 20 | 0.2 |
| Example 13 | | 0.1 | 0.5 | 0.05 | PS,1;FEC,10;VC,0.5 | 0.2 | 10 |
| Example 14 | | 0.1 | 0.5 | 0.1 | PS,1;FEC,10;VC,0.5 | 0.2 | 5 |
| Example 15 | | 0.1 | 0.5 | 1 | PS,1;FEC,10;VC,0.5 | 0.2 | 0.5 |
| Example 16 | | 0.1 | 0.5 | 2 | PS,1;FEC,10;VC,0.5 | 0.2 | 0.25 |
| Example 17 | | 0.1 | 0.5 | 2.5 | PS,1;FEC,10;VC,0.5 | 0.2 | 0.2 |
| Example 18 | | 0.1 | 0.1 | 2 | PS,1;FEC,10;VC,0.5 | 1 | 0.05 |
| Example 19 | | 0.1 | 2 | 0.1 | PS,1;FEC,10;VC,0.5 | 0.05 | 20 |
| Example 20 | | 0.1 | 0.5 | 0.5 | PS,1;DTD,1;VC,0.5 | 0.2 | 1 |
| Example 21 | | 0.1 | 0.5 | 0.5 | PS,1;DTD,1;TMSP,0.3 | 0.2 | 1 |
| Example 22 | | 0.1 | 0.5 | 0.5 | PST,0.5;TMSB,0.3;LiOD FP,0.3 | 0.2 | 1 |
| Example 23 | | 0.1 | 0.5 | 0.5 | PS,1;ES,0.3;LiODFB,0.3 | 0.2 | 1 |
| Example 24 | | 0.1 | 0.5 | 0.5 | PST,0.5;TMSB,0.3;LiPO 2F2,0.3 | 0.2 | 1 |
| Example 25 | | 0.1 | 0.5 | 0.5 | \ | 0.2 | 1 |
| Example 26 | | 3 | 0.1 | 0.1 | PS,1;FEC,10;VC,0.5 | 30 | 1 |
| Example 27 | | 0.9 | 0.09 | 3 | PS,1;FEC,10;VC,0.5 | 10 | 0.03 |
| Example 28 | | 1.5 | 3 | 0.1 | PS,1;FEC,10;VC,0.5 | 0.5 | 30 |
| Example 29 | | 0.1 | 0.05 | 0.5 | PS,1;FEC,10;VC,0.5 | 2 | 0.1 |
| Example 30 | | 0.1 | 0.05 | 0.5 | PS,1;FEC,10;VC,0.5 | 2 | 0.1 |
| Example 31 | | 0.1 | 0.05 | 0.5 | PS,1;FEC,10;VC,0.5 | 2 | 0.1 |
| Example 32 | | 0.1 | 0.05 | 0.5 | PS,1;FEC,10;VC,0.5 | 2 | 0.1 |
| Example 33 | | 0.1 | 0.05 | 0.5 | PS,1;FEC,10;VC,0.5 | 2 | 0.1 |
| Example 34 | | 0.1 | 0.05 | 0.5 | PS,1;FEC,10;VC,0.5 | 2 | 0.1 |
| Example 35 | | 0.1 | 0.05 | 0.5 | PS,1;FEC,10;VC,0.5 | 2 | 0.1 |
| Example 36 | | 0.1 | 0.05 | 0.5 | PS,1;FEC,10;VC,0.5 | 2 | 0.1 |
| Comparative Example 1 | | \ | \ | \ | PS,1;FEC,1;VC,0.5 | \ | \ |
| Comparative Example 2 | | 0.1 | \ | \ | PS,1;FEC,1;VC,0.5 | \ | \ |
| Comparative Example 3 | | \ | 0.5 | \ | PS,1;FEC,1;VC,0.5 | \ | \ |
| Comparative Example 4 | | \ | \ | 0.5 | PS,1;FEC,1;VC,0.5 | \ | \ |
| Comparative Example 5 | | 0.1 | 0.5 | \ | PS,1;FEC,1;VC,0.5 | 0.2 | \ |
| Comparative Example 6 | | 0.1 | \ | 0.5 | PS,1;FEC,1;VC,0.5 | \ | \ |
| Comparative Example 7 | | \ | 0.5 | 0.5 | PS,1;FEC,1;VC,0.5 | \ | 1 |

Electrochemical performance tests were conducted on the lithium-ion batteries obtained from the above Comparative Examples and Examples. The test results are shown in Table 2.
(1) 60°C storage test: the obtained battery was placed in a 25°C environment, and discharged at a constant current of 1 C to a cut-off voltage of 2.75 V. The capacity was recorded as an initial capacity Q₁. The battery was rested for 5 min, and then charged at the constant current of 1 C and a constant voltage to an upper voltage limit of 4.2 V with a cut-off current of 0.05 C. An initial voltage of the battery was measured as V₁. The lithium-ion battery was placed in a 60°C high-temperature chamber and rested for 30 days. The battery was taken out and placed at a room temperature for 4 hours. When a temperature of the battery dropped to the room temperature, a voltage V₂ of the battery was measured. Then, the battery was discharged at the constant current of 1 C to the cut-off voltage of 2.75 V. The capacity was recorded as Q₂. The battery was rested for 5 min, and then charged at the constant current of 1 C and the constant voltage to the upper voltage limit of 4.2 V with the cut-off current of 0.05 C. The capacity was recorded as Q₃. The calculation formulas used are: voltage drop=V₁-V₂, and capacity retention rate=Q₂/Q₁×100%.
(2) -20°C EIS test: the battery was charged at the constant current of 1 C and the constant voltage to the upper voltage limit of 4.2 V with the cut-off current of 0.05 C. The fully charged battery was rested at -20°C for 10 hours. An EIS test was performed. A potential value was set to an open-circuit voltage. A sinusoidal voltage amplitude ranged from 1 mV to 10 mV. A scanning frequency ranged from 0.1 Hz to 1,000,000 Hz. A fitting analysis was performed on the obtained test data using Z-view software to determine an SEI film impedance R_{SEI}.
(3) 45°C cycle test: the battery was placed in an environment of (45±2) °C and rested for 3 hours. Then, the battery was charged at the constant current of 1 C and the constant voltage to the upper voltage limit of 4.2 V with the cut-off current of 0.05 C. After being fully charged, the battery was rested for 5 min, and then discharged at the constant current of 1 C to the cut-off voltage of 2.75 V. A highest discharge capacity within the first three cycles was recorded as an initial capacity Q₃. When a cycle count reached 300, a discharge capacity of the last cycle, Q₄, was recorded. The calculation formula was: capacity retention rate (%)=Q₄/Q₃×100%.

**Table 2**

| No. | Voltage drop at 60°C storage/V | Capacity retention rate at 60°C storage/% | R_{SEI}/mΩ | Capacity retention rate at 45°C cycle/% |
|---|---|---|---|---|
| Example 1 | 0.062 | 81.22 | 10.3 | 83.2 |
| Example 2 | 0.058 | 85.89 | 9 | 87.45 |
| Example 3 | 0.053 | 88.94 | 8.4 | 90.55 |
| Example 4 | 0.058 | 86.02 | 8.5 | 91.67 |
| Example 5 | 0.06 | 84.33 | 8.7 | 92.33 |
| Example 6 | 0.069 | 79.23 | 9.6 | 86.32 |
| Example 7 | 0.05 | 90.02 | 9.3 | 88.21 |
| Example 8 | 0.049 | 89.78 | 9.2 | 87.89 |
| Example 9 | 0.047 | 90.56 | 8.6 | 88.56 |
| Example 10 | 0.076 | 78.34 | 10.6 | 83.25 |
| Example 11 | 0.069 | 76.84 | 11.4 | 85.14 |
| Example 12 | 0.046 | 87.04 | 8.1 | 90.86 |
| Example 13 | 0.067 | 80.13 | 11.1 | 85.1 |
| Example 14 | 0.058 | 85.51 | 8.2 | 86.77 |
| Example 15 | 0.057 | 84.89 | 8.5 | 88.36 |
| Example 16 | 0.058 | 83.67 | 8.8 | 87.22 |
| Example 17 | 0.061 | 83.01 | 10.1 | 84.38 |
| Example 18 | 0.06 | 83.3 | 9 | 86.57 |
| Example 19 | 0.048 | 89.61 | 8.3 | 87.99 |
| Example 20 | 0.054 | 89.05 | 8.5 | 89.65 |
| Example 21 | 0.053 | 88.78 | 8.4 | 90.01 |
| Example 22 | 0.053 | 89.12 | 8.5 | 90.23 |
| Example 23 | 0.054 | 89.1 | 8.4 | 89.76 |
| Example 24 | 0.052 | 88.8 | 8.5 | 89.69 |
| Example 25 | 0.055 | 87.69 | 8.3 | 90.11 |
| Example 26 | 0.084 | 75.25 | 10.9 | 81.56 |
| Example 27 | 0.082 | 75.62 | 11.1 | 81.82 |
| Example 28 | 0.081 | 75.44 | 11.3 | 82.15 |
| Example 29 | 0.061 | 81.41 | 10.2 | 83.24 |
| Example 30 | 0.060 | 81.46 | 10.3 | 83.30 |
| Example 31 | 0.061 | 81.25 | 10.4 | 83.18 |
| Example 32 | 0.063 | 81.10 | 10.4 | 83.16 |
| Example 33 | 0.062 | 81.31 | 10.2 | 83.30 |
| Example 34 | 0.061 | 81.16 | 10.3 | 83.32 |
| Example 35 | 0.061 | 81.06 | 10.4 | 83.19 |
| Example 36 | 0.063 | 81.27 | 10.2 | 83.17 |
| Comparative Example 1 | 0.092 | 73.34 | 14.8 | 72.88 |
| Comparative Example 2 | 0.09 | 74.66 | 13.7 | 75.56 |
| Comparative Example 3 | 0.088 | 74.48 | 11.8 | 76.24 |
| Comparative Example 4 | 0.085 | 74.55 | 13.2 | 77.12 |
| Comparative Example 5 | 0.091 | 74.03 | 11.6 | 81.34 |
| Comparative Example 6 | 0.087 | 74.12 | 12.5 | 80.67 |
| Comparative Example 7 | 0.086 | 74.79 | 11.6 | 79.85 |

Table 2 reveals that, in Example 1 to Example 36, the electrolyte contained a combination of electrolyte additives including the tetravinylsilane, the tris[ethenyl(dimethyl)silyl]phosphate, and the lithium tetrafluoro(oxalato)phosphate. An impedance of the SEI film on the surface of the negative electrode active material was small. An internal resistance of the battery was small. Decomposition and gas generation of the electrolyte can be effectively suppressed. The battery has satisfactory cycle performance and high-temperature storage performance. In Comparative Example 1, the first additive and the first lithium salt of the present disclosure were not added to the electrolyte, in which case the impedance of the SEI film of the battery was large, and the battery has unsatisfactory cycle performance and high-temperature storage performance. In Comparative Example 2, only the tetravinylsilane was added to the electrolyte. Due to unsatisfactory uniformity of the SEI film formed by the tetravinylsilane on the surface of the negative electrode active material, the impedance of the SEI film of the negative electrode active material remained large. In Comparative Example 3, only the lithium tetrafluoro(oxalato)phosphate was added to the electrolyte, which helped reduce the impedance of the SEI film on the surface of the negative electrode active material, but had little effect on improving the cycle performance of the battery. In Comparative Example 4, only the tris[ethenyl(dimethyl)silyl]phosphate was added to the electrolyte, which helped improve the high-temperature storage performance of the battery, but had limited improvement on the cycle performance of the battery and the impedance of the SEI film on the surface of the negative electrode active material. In Comparative Example 5, both the tetravinylsilane and the lithium tetrafluoro(oxalato)phosphate were added to the electrolyte, leading to a low impedance of the SEI film and effective suppression of the decomposition and the gas generation of the electrolyte. Further, the battery had satisfactory cycle performance, but unsatisfactory high-temperature storage performance. In Comparative Example 6, both the tetravinylsilane and the tris[ethenyl(dimethyl)silyl]phosphate were added to the electrolyte, leading to satisfactory cycle performance of the battery. However, due to a lack of the lithium tetrafluoro(oxalato)phosphate, which has a film-forming potential earlier than the tetravinylsilane, the impedance of the SEI film on the surface of the negative electrode active material was large, and the internal resistance of the battery was large. In Comparative Example 7, both the lithium tetrafluoro(oxalato)phosphate and the tris[ethenyl(dimethyl)silyl]phosphate were added to the electrolyte, which helped improve the high-temperature storage performance and the impedance of the SEI film of the battery. However, since the decomposition and the gas generation of the electrolyte cannot be effectively suppressed, the cycle performance of the battery was unsatisfactory.

It should be noted that, the above embodiments are examples only, and the present disclosure is not limited to the above embodiments. Embodiments having substantially the same composition as the technical concept and exerting the same functional effect within the scope of the technical solutions of the present disclosure are encompassed in the technical scope of the present disclosure. Without departing from the scope of the spirit of the present disclosure, various modifications conceivable by those skilled in the art can be applied to the embodiments, or some or all of the technical features therein can be equivalently replaced. Such modifications or replacements do not cause the essential nature of the corresponding technical solutions to depart from the scope of technical solutions of various embodiments of the present disclosure. All such modifications or replacements are to be encompassed by the scope of the claims as appended and the specification of the present disclosure.

The technical features mentioned in each embodiment can be combined arbitrarily without any conflict. The present disclosure is not limited to the particular embodiments disclosed herein, and includes all technical solutions falling within the scope of the claims as appended.

## Claims

1. An electrolyte additive for a battery with a silicon-based negative electrode, the electrolyte additive comprising:
a first additive, wherein the first additive comprises tetravinylsilane and tris[ethenyl(dimethyl)silyl]phosphate; and
a first lithium salt, wherein the first lithium salt comprises lithium tetrafluoro(oxalato)phosphate.

2. The electrolyte additive according to claim 1, wherein in the electrolyte additive, a mass fraction of the tetravinylsilane is a, and a mass fraction of the lithium tetrafluoro(oxalato)phosphate is b, where a/b ranges from 0.05 to 20.

3. The electrolyte additive according to claim 1 or 2, wherein in the electrolyte additive, a mass fraction of the lithium tetrafluoro(oxalato)phosphate is b, and a mass fraction of the tris[ethenyl(dimethyl)silyl]phosphate is c, where b/c ranges from 0.05 to 20.

4. The electrolyte additive according to any one of claims 1 to 3, further comprising a second additive, wherein the second additive comprises at least one of a high-temperature additive, a negative electrode film-forming additive, a lithium salt additive, or a water-/acid-scavenging additive.

5. The electrolyte additive according to claim 4, wherein the second additive satisfies at least one of the following conditions:
the high-temperature additive comprises at least one of 1,3-propane sultone, 1,3-propene sultone, ethylene sulfate, or ethylene sulfite;
the negative electrode film-forming additive comprises at least one of vinylene carbonate, fluoroethylene carbonate, or vinyl ethylene carbonate;
the lithium salt additive comprises at least one of lithium bis(oxalato)borate, lithium difluoro(oxalato)borate, lithium difluorobis(oxalato)phosphate, lithium tetrafluoroborate, lithium bis(trifluoromethanesulfonyl)imide, lithium bis(pentafluoroethanesulfonyl)imide, lithium trifluoromethanesulfonate, or lithium difluorophosphate; or
the water-/acid-scavenging additive comprises at least one of tris(trimethylsilyl) borate or tris(trimethylsilyl) phosphate.

6. An electrolyte, comprising the electrolyte additive according to any one of claims 1 to 5.

7. The electrolyte according to claim 6, further comprising a solvent and an electrolyte lithium salt, wherein the electrolyte lithium salt comprises at least one of lithium hexafluorophosphate or lithium bis(fluorosulfonyl)imide.

8. The electrolyte according to claim 7, wherein in the electrolyte, a mass fraction of the electrolyte lithium salt ranges from 12% to 18%.

9. The electrolyte according to any one of claims 6 to 8, wherein in the electrolyte, a mass fraction of the tetravinylsilane ranges from 0.1% to 2%.

10. The electrolyte according to any one of claims 6 to 9, wherein in the electrolyte, a mass fraction of the lithium tetrafluoro(oxalato)phosphate ranges from 0.1% to 2%.

11. The electrolyte according to any one of claims 6 to 10, wherein in the electrolyte, a mass fraction of the tris[ethenyl(dimethyl)silyl]phosphate ranges from 0.1% to 2%.

12. The electrolyte according to any one of claims 6 to 11, wherein in the electrolyte, a mass fraction of the second additive ranges from 0.5% to 3%.

13. A battery, comprising the electrolyte additive according to any one of claims 1 to 5 or the electrolyte according to any one of claims 6 to 12.

14. The battery according to claim 13, further comprising a negative electrode plate, wherein the negative electrode plate comprises a negative electrode current collector and a negative electrode active material layer located on at least one side of the negative electrode plate, the negative electrode active material layer comprising a negative electrode active material, a mass fraction of element silicon in the negative electrode active material ranging from 3% to 50%.

15. An electric device, comprising the battery according to claim 13 or 14.
